(19) Europäisches Patentamt / European Patent Office / Office européen des brevets

(11) **EP 4 103 346 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **21703691.2**

(22) Anmeldetag: **05.02.2021**

(51) Internationale Patentklassifikation (IPC):
**B23C 3/18** (2006.01)   **B23C 5/10** (2006.01)

(52) Gemeinsame Patentklassifikation (CPC):
**B23C 3/18; B23C 5/10;** B23C 2210/084;
B23C 2220/605; B23C 2265/08

(86) Internationale Anmeldenummer:
**PCT/EP2021/052777**

(87) Internationale Veröffentlichungsnummer:
**WO 2021/160534 (19.08.2021 Gazette 2021/33)**

(54) **VERFAHREN ZUM HERSTELLEN EINES WERKSTÜCKS, INSBESONDERE EINER TURBINENSCHAUFEL, MIT EINEM FRÄSWERKZEUG**

METHOD FOR PRODUCING A WORKPIECE, IN PARTICULAR A TURBINE BLADE, USING A MILLING TOOL

PROCÉDÉ DE FABRICATION D'UNE PIÈCE, EN PARTICULIER D'UNE AUBE DE TURBINE, AU MOYEN D'UN OUTIL DE FRAISAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.02.2020   DE 102020000882**

(43) Veröffentlichungstag der Anmeldung:
**21.12.2022   Patentblatt 2022/51**

(73) Patentinhaber: **OPEN MIND Technologies AG**
**82234 Wessling (DE)**

(72) Erfinder:
• **KOCH, Josef**
  **81371 Muenchen (DE)**
• **BRAMBS, Peter**
  **80803 Muenchen (DE)**

(74) Vertreter: **Weickert, Jonas**
**Thum & Partner**
**Thum Mötsch Weickert**
**Patentanwälte PartG mbB**
**Siebertstraße 6**
**81675 München (DE)**

(56) Entgegenhaltungen:
**EP-A1- 0 316 807        DE-B3- 102015 104 679**
**DE-B4- 102005 063 549**

EP 4 103 346 B1

**Beschreibung**

Die Erfindung betrifft ein Verfahren zum Herstellen eines Werkstücks, insbesondere einer Turbinenschaufel, mit einem Fräswerkzeug.

Bekanntermaßen erfolgt die Herstellung eines Werkstücks mit einem Fräswerkzeug in mehreren Schritten, die die Schritte eines Schruppens und eines Schlichtens umfassten. Darunter versteht man eine Bearbeitung eines Rohteils durch spanendes Abheben von Material, wobei beim Schruppen das Rohteil grob und beim Schlichten fein bearbeitet wird, sodass beim Schruppen der Materialabtrag vergleichsweise größer ist, die erhaltene Oberflächengüte aber deutlich weniger gut ist. Optional kann dem Schruppen oder/und dem Schlichten ein vorbereitender Schritt vorgeschaltet sein.

Der unterschiedliche Materialabtrag beim Schruppen und Schlichten erfordert es, dass das für den jeweiligen Schritt zu verwendende Fräswerkzeug an diesen angepasst ist. Zu diesem Zweck können zwei unterschiedliche Fräser verwendet werden, beispielsweise ein Fräser mit zahnartigen Schneiden für das Schruppen und ein Fräser ohne zahnartige Schneiden für das Schlichten. Dies hat jedoch den Nachteil, dass das Fräswerkzeug zwischen den genannten Schritten ausgetauscht werden muss, was die Gesamtbearbeitungszeit vom Rohteil bis zum fertigen Werkstück erhöht.

Der Wunsch nach einer verkürzten Bearbeitungszeit, indem ein Wechsel des Fräsers vermieden wird, ist im Stand der Technik bekannt. Zum Beispiel schlägt US 6,077,002 A vor, unterschiedliche Schneidbereiche eines Kugelfräsers für das Schruppen und Schlichten zu verwenden, um unterschiedliche Bauteilbereiche zu bearbeiten. Zu diesem Zweck ist der kugelförmige Kopf des Fräsers mit Zähnen versehen, um eine Nut in das Bauteil zu Schruppen, wohingegen Seitenflächen ohne Zähne des sich an den kugelförmigen Kopf anschließenden Schafts zum Schlichten von Seitenwänden der Nut eingerichtet sind. Es versteht sich, dass für diese Anwendung der Schaft des Fräsers parallel zu der zu schlichtenden Oberfläche geführt werden muss, wodurch nicht alle Bereiche eines Rohteils zugänglich sind.

Speziell für die Bearbeitung von schaufelförmigen Werkstücken, bei denen die Gefahr von durch das Fräsen entstehenden Schwingungen hoch ist, schlägt CH 661 678 A5 einen Fräser vor, bei dem eine Materialabtragung mit einem Stirnfräser und einem Umfangsfräser, kombiniert in einem Fräswerkzeug, erfolgt. Dabei tritt zunächst der Schaft des Fräsers (Umfangsfräser) in das Rohmaterial ein, bevor der Fräser mittels Stirnfräsen einen Teil des Rohmaterials und anschließend mittels Umfangsfräsen einen anderen Teil des Rohmaterials bearbeitet. Beim Umfangsfräsen und beim Stirnfräsen werden also unterschiedliche Bereiche des Werkstücks bearbeitet. Eine Anwendung eines bestimmten Fräserabschnitts für einen bestimmten Bearbeitungsschritt, wie beispielsweise Schruppen oder/und Schlichten, ist in der CH 661 678 A5 nicht gezeigt. Zwar ergibt sich hier der oben genannte Zeitvorteil einer kombinierten Verwendung eines Fräsers mittels zweier Fräserbereiche, jedoch überlappen sich diese in dem in CH 661 678 A5 offenbarten Verfahren, wodurch die Lebensdauer des Fräsers verringert wird.

Ein anderer Ansatz ein Verfahren zur Herstellung von schaufelförmigen Werkstücken bereitzustellen, kann US 2017/095865 A1 entnommen werden. Bei dem in diesem Dokument offenbarten Verfahren wird ein starker Werkzeugverschleiß dadurch verringert, dass das Werkstück nicht mehr entlang großer Bereiche bearbeitet wird, sondern dass stattdessen sequenziell Material vom Werkstück in kleineren Bereichen abgetragen wird. Dies erhöht einerseits die Stabilität des zu bearbeitenden Materials während der Bearbeitung und schont andererseits das Werkzeug. Darüber hinaus ist kein Werkzeugwechsel notwendig, da der gewünschte Materialabtrag so angepasst ist, das gleiche Schneidbereiche eines Kugelfräsers verwendet werden können. Nachteilig bei diesem Verfahren ist jedoch, dass der Fräser einerseits nicht grob genug für einen großen Materialabtrag beim Schruppen und andererseits nicht fein genug zur Erzielung einer hohen Oberflächengüte beim Schlichten ist. Die erzielbare Oberflächenqualität kann daher nicht ausreichend sein oder es kann erforderlich sein, einen weiteren Feinbearbeitungsschritt, der sich dem Schlichten anschließt, durchzuführen. Als weiterer Stand der Technik wird auf die Dokumente DE 10 2016 117 932 A1, EP 0 316 807 A1 und DE 10 2015 104 679 B3 verwiesen. Das letztgenannte Dokument offenbart einen konisch-konvexen Fräser zur Bearbeitung ebener Flächen eines Werkstücks. Bei der Bearbeitung kontaktiert die Schneide des Fräsers das Werkstück in einem Kontaktpunkt. Abhängig von der Gestalt des zu bearbeitenden Werkstücks kann zum Beispiel bei winklig zueinander angeordneten Werkstückflächen der Fräser zusätzlich zu dem Kontaktpunkt an der Schneide des Fräsers mit einem Übergangsbereich des Fräsers mit dem Werkstück in Kontakt gelangen.

Ausgehend von diesem Stand der Technik liegt der vorliegenden Erfindung die Aufgabe zugrunde, ein Verfahren zum Herstellen eines Werkstücks bereitzustellen, das eine effiziente Bearbeitung eines Rohteils durch Schruppen und Schlichten zu einem Werkstück, insbesondere einer Turbinenschaufel, ermöglicht und dabei das Fräswerkzeug schont.

Die Aufgabe wird unter Verwendung eines Verfahrens zum Herstellen eines Werkstücks, insbesondere einer Turbinenschaufel, mit einem Fräswerkzeug gelöst, das als konisch-konvexer Fräser ausgebildet ist. Der konisch-konvexe Fräser umfasst einen Schaft und einen endseitig mit dem Schaft unmittelbar oder mittels eines Übergangs verbundenen konisch-konvexen Fräserabschnitt, wobei der konisch-konvexe Fräser einen ersten und einen zweiten Schneidbereich aufweist, wobei der erste Schneidbereich an dem Schaft oder/und an dem Übergang vorgesehen ist, und wobei der zweite Schneidbereich an dem konisch-konvexen Fräserabschnitt vorgesehen ist. Das Verfahren umfasst die folgenden Schritte:

A) Schruppen eines Rohteilabschnitts mit dem konisch-konvexen Fräser, wobei dieser relativ zu einer aktuellen Vorschubrichtung an einem Referenzpunkt des konisch-konvexen Fräsers derart innerhalb eines ersten Bearbeitungswinkelbereichs angestellt wird, dass eine spanabhebende Bearbeitung mit dem ersten Schneidbereich des konisch-konvexen Fräsers erfolgt, wobei der zweite Schneidbereich bei der spanabhebenden Bearbeitung passiv bleibt, und

B) Schlichten zumindest eines Teils des geschruppten Rohteilabschnitts mit dem konisch-konvexen Fräser, wobei dieser gegenüber der aktuellen Vorschubrichtung an dem Referenzpunkt des konisch-konvexen Fräsers derart innerhalb eines zweiten Bearbeitungswinkelbereichs angestellt wird, dass eine spanabhebende Bearbeitung mit dem zweiten Schneidbereich des konisch-konvexen Fräsers erfolgt, wobei der zweite Schneidbereich zur spanabhebenden Bearbeitung an dem Rohteil, insbesondere dem geschruppten Rohteilabschnitt davon, angreift.

Das erfindungsgemäße Verfahren zeichnet sich dadurch aus, dass es eine effiziente Bearbeitung eines Rohteils durch Schruppen und Schlichten zu einem Werkstück ermöglicht, dessen Gesamtbearbeitungsdauer gering ist, da für die angesprochenen Verfahrensschritte kein Wechsel des Fräsers notwendig ist. Erfindungsgemäß kann also ein und derselbe Fräser für beide Bearbeitungsschritte verwendet werden. Darüber hinaus ermöglicht das erfindungsgemäße Verfahren eine schonende Verwendung des konisch-konvexen Fräsers, indem unterschiedliche Schneidbereiche zur Bearbeitung genutzt werden, die gezielt an den jeweiligen Einsatzzweck angepasst sind.

Speziell dadurch, dass die spanabhebende Bearbeitung beim Schruppen mit dem ersten Schneidbereich des konisch-konvexen Fräsers erfolgt, und die spanabhebende Bearbeitung beim Schlichten mit dem zweiten Schneidbereich des konisch-konvexen Fräsers erfolgt, werden je nach Verfahrensschritt unterschiedliche Schneidbereiche des konisch-konvexen Fräsers beansprucht, wodurch der konisch-konvexe Fräser geschont und somit dessen Lebensdauer erhöht wird.

Im Folgenden soll die in der Anmeldung verwendete Terminologie in Bezug auf speziell verwendete Begriffe näher erläutert werden. Wird in dieser Anmeldung von einem Rohteil gesprochen, dann kann dies aus jeglichem Material sein, das mittels Schruppen und/oder Schlichten zu bearbeiten ist. Ein durch Schruppen verarbeitetes Rohteil wird als geschrupptes Rohteil und ein durch Schruppen und Schlichten verarbeitetes Rohteil wird als geschrupptes und geschlichtetes Rohteil bezeichnet, wobei ein geschrupptes und geschlichtetes Rohteil gleichermaßen als Werkstück bezeichnet werden kann, wenn alle zu bearbeitenden Rohteilabschnitte geschruppt und geschlichtet sind.

Das Schruppen kann beispielsweise auch ein Vorschlichten sein oder vor dem Schlichten kann sowohl ein Vorschlichten als auch ein Schruppen erfolgen. Ferner kann vor dem Schruppen bzw. Vorschlichten eine ergänzende Vorbereitung erfolgen, bei der die Ein- und Austrittskanten in das bzw. aus dem Rohteil vorbereitet werden.

Als Vorschubrichtung wird im Allgemeinen eine relative Bewegungsrichtung zwischen dem Fräser und dem Rohteil bezeichnet, wobei hier an eine Richtung gedacht wird, in der ein Materialabtrag erfolgt. Die Vorschubrichtung kann ferner senkrecht zu einer Oberflächennormalen an einem aktuellen Bearbeitungspunkt des Rohteils verlaufen.

Als Referenzpunkt kann ein definierter Punkt an dem konisch-konvexen Fräser gewählt werden. Der Referenzpunkt kann beispielsweise an einer dem Schaft abgewandten, endseitigen Flanke oder Spitze, z.B. der vordersten Spitze, des konisch-konvexen Fräserabschnitts definiert sein. Der Referenzpunkt kann auch ein beliebiger Punkt auf der Achse des konisch-konvexen Fräsers sein, beispielsweise ein äußerster bzw. vorderster Punkt einer ggf. vorhandenen zusätzlichen kugelförmigen Spitze an dem konisch-konvexen Fräserabschnitt sein.

Die angesprochenen Bearbeitungswinkelbereiche beim Schruppen und beim Schlichten enthalten vorzugsweise alle Winkeleinstellungen des Fräsers, mittels denen die in Schritt A) bzw. B) angegebenen Fräsvorgänge möglich sind. Hiervon sind vorzugsweise etwaige Sturzwinkel sowie seitliche Neigungswinkel in Bezug auf die Vorschubrichtung des konisch-konvexen Fräsers mit umfasst, die später detaillierter beschrieben werden.

Der Einsatzbereich des Fräsers ist in vorteilhafter Weise nicht auf bestimmte Rohteil- bzw. Werkstückgeometrien begrenzt. Dies kann erreicht werden, indem der konisch-konvexe Fräser während der Schritte A) des Schruppens und B) des Schlichtens innerhalb des ersten Bearbeitungswinkelbereichs bzw. des zweiten Bearbeitungswinkelbereichs variabel bewegbar ist.

Der erste und der zweite Bearbeitungswinkelbereich können sich überlappen oder aneinander angrenzen. Alternativ können diese Bearbeitungswinkelbereiche betragsmäßig voneinander beabstandet sein. Auf diese Weise kann stets der geeignete Bearbeitungswinkelbereich ausgewählt werden, der das Schruppen und Schlichten gemäß den vorstehenden Ausführungen ermöglicht. Es wird also ein flexibler Einsatz des Verfahrens für unterschiedliche Rohteil- bzw. Werkstückgeometrien bereitgestellt.

Bei der Herstellung von schmalen, langen Bauteilen, wie beispielsweise einer Turbinenschaufel, besteht das Risiko, dass das Rohteil während der Bearbeitung aufgrund seiner Geometrie und der damit einhergehenden fehlenden Stabilität schwingt, was zu höheren Fertigungstoleranzen bei der Herstellung des Werkstücks führen kann. Dieses Risiko kann vermieden werden, wenn die Schritte A) des Schruppens und B) des Schlichtens alternierend an unterschiedlichen, vorzugsweise aneinander angrenzenden, Rohteilabschnitten durchgeführt werden. Auf diese Weise sind über eine vergleichsweise lange Bearbeitungszeit Rohteilabschnitte mit größerer Dimension vorhanden, die Materialschwingungen entgegenwirken. Diese Verfahrensführung dient also der Steigerung der Qualität und Effizienz des Verfahrens.

Wie eingangs ausgeführt, kann der Fräser innerhalb von Bearbeitungsbereichen angestellt werden. Eine Möglichkeit besteht dabei darin, dass der konisch-konvexe Fräser während des Schrittes A) des Schruppens innerhalb des ersten Bearbeitungswinkelbereichs in Richtung der aktuellen Vorschubrichtung des konisch-konvexen Fräsers um einen ersten Sturzwinkel gekippt wird. Das Kippen des konisch-konvexen Fräsers um den ersten Sturzwinkel ermöglicht es, das Schruppen mit dem ersten Schneidbereich durchzuführen und sicherzustellen, dass der zweite Schneidbereich dabei passiv bleibt. Somit kann gewährleistet sein, dass der für das Schlichten vorgesehene zweite Schneidbereich beim Schruppen geschont wird und sich somit insgesamt die Lebensdauer des konisch-konvexen Fräsers erhöht.

Der Sturzwinkel ist im Allgemeinen zwischen einer Längsachse des Fräsers und einer Oberflächennormalen des geschruppten Rohteils bzw. des geschruppten und geschlichteten Rohteils bzw. des Werkstücks, also vorzugsweise der durch Schruppen oder/und Schlichten entstehenden Oberfläche, in der Vorschubrichtung an einem aktuellen Bearbeitungspunkt definiert.

Der Sturzwinkel ist bevorzugt größer als der Umfangsflächenwinkel des konisch-konvexen Fräserabschnitts, um sicherzustellen, dass der konisch-konvexe Fräserabschnitt beim Schruppen passiv bleibt. Der Betrag, um welchen der Sturzwinkel größer sein kann als der Umfangsflächenwinkel, kann von einem (später beschriebenen) Krümmungsradius des konisch-konvexen Fräserabschnitts abhängen. Beispielsweise kann der Betrag umso größer sein, je kleiner der Krümmungsradius ist, d.h. je stärker die Wölbung des konisch-konvexen Fräserabschnitts ist. Der Umfangsflächenwinkel kann berechnet werden als

$$\text{Umfangsflächenwinkel} = 90° - \text{Konuswinkel,}$$

wobei der Konuswinkel als Winkel zwischen einem einer Umfangsfläche des konisch-konvexen Fräsers zugrundeliegenden Konus und einer Längsachse durch den konisch-konvexen Fräser definiert sein kann, wobei die Umfangsfläche des zugrundeliegenden Konus, die Längsachse und eine Senkrecht zu der Längsachse verlaufende Linie eine Dreiecksfläche einschließen.

Ein effektives Schlichten mit dem zweiten Schneidbereich kann erzielt werden, indem der konisch-konvexe Fräser in Schritt B) beim Schlichten innerhalb des zweiten Bearbeitungswinkelbereichs in Richtung einer Vorschubrichtung des Fräsers um einen zweiten Sturzwinkel gekippt ist.

Der erste oder/und der zweite Sturzwinkel kann/können sich während der Bearbeitung eines Rohteils bzw. geschruppten Rohteils abhängig von der zu erzielenden Geometrie des Rohteils ändern.

Eine weitere Möglichkeit den konisch-konvexen Fräser innerhalb seiner Bearbeitungswinkelbereiche anzustellen, kann darin bestehen, dass der konisch-konvexe Fräser in Schritt A) beim Schruppen innerhalb des ersten Bearbeitungswinkelbereichs seitlich zur Vorschubrichtung um einen ersten Neigungswinkel geneigt ist oder/und der Fräser in Schritt B) beim Schlichten innerhalb des zweiten Bearbeitungswinkelbereichs seitlich zur Vorschubrichtung um einen zweiten Neigungswinkel geneigt ist.

Der Neigungswinkel ist im Allgemeinen zwischen der Längsachse des Fräsers und der Oberflächennormalen des geschruppten Rohteils bzw. des geschruppten und geschlichteten Rohteils bzw. des Werkstücks, also vorzugsweise der durch Schruppen oder/und Schlichten entstehenden Oberfläche, seitlich zu der Vorschubrichtung an einem aktuellen Bearbeitungspunkt definiert. Die sich vorzugsweise auf die Vorschubrichtung beziehende seitliche Neigung des Fräsers in dem Schritt A) oder/und dem Schritt B) um den ersten bzw. zweiten Neigungswinkel kann wahlweise eine seitliche Neigung nach links oder rechts sein.

Mittels der angesprochenen Neigung ergeben sich die zuvor in Bezug auf den ersten bzw. zweiten Sturzwinkel angeführten Vorteile in analoger Weise. D.h. die Einstellung des ersten Neigungswinkels kann zu einer Werkzeugschonung und einer damit einhergehenden längeren Lebensdauer des konisch-konvexen Fräsers führen bzw. dazu beitragen, dass der Schritt des Schruppens effizient durchgeführt werden kann.

Ferner kann eine seitliche Neigung, also eine Neigung um den ersten Neigungswinkel, je nach Rohteilgeometrie die Schnittbedingungen verbessern, den Eingriff der entsprechenden Schneidbereiche unterstützen oder/und auch zur Kollisionsvermeidung dienlich sein.

In einer bevorzugten Durchführung des Verfahrens kann der konisch-konvexe Fräser während des Schruppens um den ersten Sturzwinkel gekippt sein und während des Schlichtens um den zweiten Neigungswinkel geneigt sein, während vorzugsweise ein Neigen um den ersten Neigungswinkel beim Schruppen sowie ein Kippen um den zweiten Sturzwinkel des konisch-konvexen Fräsers beim Schlichten optional ist.

Vorzugsweise berührt/berühren beim Schlichten der Schaft oder/und der Übergang des konisch-konvexen Fräsers das geschruppte Rohteil nicht. Bei einem etwas größeren Aufmaß beim Schruppen kann/können jedoch während des Schlichtens auch der Schaft oder/und der Übergang mit Material des geschruppten Rohteils in Eingriff gelangen. Der Schaft oder/und der Übergang führen dann jedoch kein Schlichten, sondern ein Schruppen aus.

Beispielsweise wird in einer Ausführungsform der konisch-konvexe Fräser während des Schrittes A) des Schruppens innerhalb des ersten Bearbeitungswinkelbereichs in Richtung einer Vorschubrichtung des konisch-konvexen Fräsers um einen ersten Sturzwinkel gekippt und in Schritt B) beim Schlichten innerhalb des zweiten Bearbeitungswinkelbereichs seitlich zur Vorschubrichtung um einen zweiten Neigungswinkel geneigt.

In einer anderen Ausführungsform kann der erste Neigungswinkel während des Schruppens vorzugsweise kleiner sein als der zweite Neigungswinkel während des Schlichtens.

Der erste und der zweite Neigungswinkel können abhängig von der Kontur des Rohteils bzw. geschruppten Rohteils bzw. des Werkstücks während der Bearbeitung variieren. Der erste Neigungswinkel beim Schruppen sollte derart gewählt werden, dass der konisch-konvexe Fräserabschnitt passiv bleibt. Im Allgemeinen sind der erste Neigungswinkel, der zweite Neigungswinkel, der erste Sturzwinkel oder/und der zweite Sturzwinkel voneinander unabhängig einstellbar.

Wie allgemein bekannt, erfolgt bei Fräsverfahren eine Relativbewegung zwischen dem Fräser und dem zu bearbeitenden Rohteil, wodurch vom Fräser erfasstes Material des Rohteils abgetragen wird. Zur Erzeugung der Relativbewegung kann/können sich lediglich der Fräser, lediglich das Rohteil oder beide bewegen. Eine entscheidende Komponente ist jedoch, wie die angesprochene Relativbewegung erfolgt. In Bezug auf das hierin offenbarte Verfahren wird vorgeschlagen, dass in Schritt A) während des Schruppens oder/und in Schritt B) während des Schlichtens die Relativbewegung zwischen dem konisch-konvexen Fräser und dem Rohteil kontinuierlich erfolgt, wobei der konisch-konvexe Fräser um das Rohteil bzw. das geschruppte Rohteil oder/und das Rohteil bzw. das geschruppte Rohteil relativ zu dem konisch-konvexen Fräser entlang definierter Fräsbahnen kontinuierlich geführt wird. Dabei können die definierten Fräsbahnen vollständig umlaufend oder/und unterbrochen oder/und mittels Verbindungsbahnen verbunden sein.

Die kontinuierliche Relativbewegung ermöglicht eine zeitsparende Bearbeitung des Rohmaterials, da der Fräser fortwährend relativ zu dem abzutragenden Material positioniert ist und somit keine Bearbeitungszeit, beispielsweise zum erneuten Positionieren des Fräsers, benötigt wird.

Ferner können die Fräsbahnen in Schritt A) beim Schruppen und in Schritt B) beim Schlichten im Wesentlichen gleich sein, in der Regel unterscheiden sie sich aber voneinander. Eine Optimierung des Fräsverfahrens kann dadurch erfolgen, dass die Fräsbahnen gezielt an die Geometrie des für den jeweiligen Verfahrensschritt vorgesehenen Schneidbereichs des Fräsers angepasst sind. Die Fräsbahnen können für jeden der Schritte A) und B) abhängig von diversen Parametern berechnet werden, wie beispielsweise einer Werkzeuggeometrie, einem Bearbeitungswinkel, einem Schruppaufmaß oder/und einer erforderlichen Oberflächenqualität nach dem Schlichten. Der konisch-konvexe Fräser kann beispielsweise kontinuierlich um das Rohteil herumgeführt werden, vorzugsweise mit einem permanenten Kontakt zwischen dem Fräser und dem Rohteil.

Fräsbahnen können visualisiert werden, indem die Bahn eines bestimmten Referenzpunktes an dem Fräser dargestellt wird. Bei dem Referenzpunkt kann es sich um den bereits eingangs genannten Referenzpunkt handeln. Als Referenzpunkt kann also ein definierter Punkt an dem konisch-konvexen Fräser gewählt werden. Der Referenzpunkt kann beispielsweise an einer dem Schaft abgewandten, endseitigen Flanke oder Spitze, z.B. der vordersten Spitze, des konisch-konvexen Fräserabschnitts definiert sein. Der Referenzpunkt kann auch ein beliebiger Punkt auf der Längsachse des konisch-konvexen Fräsers sein, beispielsweise ein äußerster bzw. vorderster Punkt einer zusätzlichen kugelförmigen Spitze an dem konisch-konvexen Fräserabschnitt.

Die beim Schruppen oder/und Schlichten des Rohteils mit dem konisch-konvexen Fräser abgefahrenen Fräsbahnen können spiralförmig bzw. helixförmig verlaufen. Auf diese Weise kann das Rohteil oder ein Abschnitt davon kontinuierlich bearbeitet werden, wobei vorzugsweise der Fräser kontinuierlich mit dem Werkstück in Kontakt ist und einen der Schritte Schruppen oder Schlichten ausführt.

Alternativ können die beim Schruppen oder/und Schlichten des Rohteils mit dem konisch-konvexen Fräser entstehenden Fräsbahnen in einer Ebene verlaufen. Die Fräsbahnen können auch voneinander getrennt sein und mittels Verbindungsbahnen verbunden sein, wobei das Fräswerkzeug bei einer Bewegung entlang der Verbindungsbahnen das Rohteil nicht berühren kann.

Ferner können die Fräsbahnen in Schritt A) während des Schruppens und in Schritt B) während des Schlichtens um einen definierten Bahnabstand voneinander beabstandet sein, wobei die Bahnabstände in Schritt A) während des Schruppens und in Schritt B) während des Schlichtens identisch sein können oder sich voneinander unterscheiden können.

Der Bahnabstand beeinflusst beispielsweise die Kontur der Oberfläche, beispielsweise eine Oberflächenstruktur. Es versteht sich, dass bei einem größeren Bahnabstand die entstehende Oberfläche konturierter ist im Vergleich zu einem kleineren Bahnabstand. Wird also beispielsweise beim Schruppen ein größerer Bahnabstand gewählt, ist der Materialabtrag beim Schlichten höher. Mit der Wahl des Bahnabstands kann daher auch bestimmt werden, die Bereiche des Fräsers wie stark bei der Bearbeitung beansprucht werden. Eine geeignete Wahl des Bahnabstands kann daher dazu beitragen, eine gewünschte Werkzeugschonung und somit eine längere Lebensdauer des Werkzeugs herbeizuführen.

Ein weiterer Parameter, der die Oberflächenstruktur nach der Bearbeitung des Rohteils beeinflusst, ist das Schruppaufmaß, das den Abstand einer Oberfläche des geschruppten Rohteils zu der gewünschten Endkontur des Werkstücks beschreibt. Je nach Wahl des Schruppaufmaßes beim Schruppen kann der Materialabtrag beim anschließenden Schlichten beeinflusst werden. Dies ist also ein weiterer Parameter, der sich auf die Beanspruchung des Fräsers auswirken kann. Ist beispielsweise das Schruppaufmaß relativ groß gewählt, kann vergleichsweise mehr Material des Rohteils nach dem Schruppen vorhanden sein, das beim Schlichten abzutragen ist, und es kann demzufolge während des Schlichtens in bestimmten Bereichen des geschruppten Rohteils der erste Schneidbereich des Fräsers das geschruppte Rohteil berühren.

Im Folgenden werden vorteilhafte Ausführungen des konisch-konvexen Fräsers beschrieben, mittels denen das hierin offenbarte Verfahren besonders vorteilhaft durchgeführt werden kann.

Beispielsweise kann der bereits angesprochene Konuswinkel zwischen einer Längsachse des Fräsers und der Umfangsfläche des dem konisch-konvexen Fräserabschnitts zugrundeliegenden Konus in einem Winkelbereich von 50° bis 85° liegen. Dieser Winkelbereich ermöglicht in vorteilhafter Weise ein effektives Eingreifen des ersten Schneidbereichs und ein passiv Bleiben des zweiten Schneidbereichs beim Schruppen innerhalb des ersten Bearbeitungswinkelbereichs. Besonders bevorzugt beträgt der Konuswinkel etwa 50° bis 85°, was eine Bearbeitung verschiedenster Rohteil- bzw. Werkstückgeometrien ermöglicht.

Wie eingangs erwähnt, ist der erste Schneidbereich des konisch-konvexen Fräsers an dem Schaft oder/und an dem Übergang zwischen dem Schaft und dem konisch-konvexen Fräserabschnitt vorgesehen. Bevorzugt beträgt ein Verhältnis von einem Übergangsradius zu einem Schaftdurchmesser zwischen 0 % und 30 %, wobei vorzugsweise ein Übergangsradius von 0 % bedeutet, dass kein Übergangsradius zwischen Schaft und konisch-konvexen Fräserabschnitt vorhanden ist.

Ein sich als besonders vorteilhaft erweisender konisch-konvexer Fräser, beispielsweise zur Bearbeitung von Turbinenschaufeln, kann einen Schaftdurchmesser zwischen 4 mm und 25 mm, bevorzugt zwischen 9 mm und 15 mm, besonders bevorzugt zwischen 11 mm und 13 mm aufweisen. In einer weiteren besonders bevorzugten Ausführung kann der Schaftdurchmesser etwa 12 mm betragen.

Ferner hat sich beispielsweise ein Krümmungsradius des konisch-konvexen Fräserabschnitts zwischen 400 mm und 600 mm, bevorzugt zwischen 450 mm und 550 mm, besonders bevorzugt von etwa 500 mm als vorteilhaft herausgestellt, da auf diese Weise der zweite Schneidbereich besonders effektiv verwendet werden kann. Es wird daher der Materialabtrag und somit die Gesamtbearbeitungszeit optimiert.

Der angesprochene Vorteil wird gleichermaßen erreicht, wenn vorzugsweise ein Verhältnis des Krümmungsradius einer Umfangsfläche des konisch-konvexen Fräserabschnitts zu einem Schaftdurchmesser des Fräsers 2 bis 50 beträgt.

Je nach Anwendungsfall kann der Übergang zwischen dem Schaft und dem konisch-konvexen Fräserabschnitt stetig, stufenweise oder scharf sein. Eine an das zu bearbeitende Rohteil angepasste Auswahl kann den Verschleiß des Fräsers verringern und somit dessen Lebensdauer erhöhen.

Es versteht sich, dass der Übergang vorzugsweise als Radius oder freie Kurve ausgebildet sein kann, es muss also kein definierter Radius vorhanden sein.

Grundsätzlich kann der Schaft des Fräsers zum Ausführen des erfindungsgemäßen Verfahrens im wesentlichen zylindrisch ausgebildet sein. Alternativ ist es möglich, dass der Schaft im wesentlichen konisch ausgebildet ist, wobei dieser dann unmittelbar oder mit dem oben genannten Übergang in den konisch-konvexen Fräserabschnitt übergeht. Ferner ist es möglich, dass sich der Schaft des Fräsers aus einem zylindrischen Abschnitt und einem sich daran anschließenden konischen Abschnitt zusammensetzt, was als konisch-zylindrischer Schaft bezeichnet wird. So kann der Schaft beispielsweise einen im wesentlichen zylindrischen Abschnitt aufweisen und dann in einem gerundeten Übergang oder unmittelbar in einen konischen Abschnitt übergehen und von diesem konischen Abschnitt dann unmittelbar oder über den oben genannten Übergang in den konisch-konvexen Fräserabschnitt übergehen. Ferner ist es möglich, dass sich der Schaft aus einer Mehrzahl von verschiedenen Abschnitten zusammensetzt, beispielsweise einen im wesentlichen zylindrischen Abschnitt aufweist, der dann in einen konischen Abschnitt übergeht, wobei der Schaft von diesem konischen Abschnitt ausgehend wiederum in einen zylindrischen Abschnitt übergeht, der unmittelbar oder über den vorstehend angesprochenen Übergang in den konisch-konvexen Fräserabschnitt übergeht. Auch unmittelbare oder gerundete Übergänge zwischen den einzelnen Schaftabschnitten sowie in ihrem Außenprofil gekrümmte Schaftabschnitte sind erfindungsgemäße Alternativen.

Ferner kann die Effektivität der Bearbeitung eines Rohteils verbessert werden, indem sich der konisch-konvexe Fräserabschnitt zu einer Spitze oder einer Endfläche hin verjüngt oder eine zusätzliche kugelförmige Spitze an dem freiliegenden Ende des konisch-konvexen Fräserabschnitts vorhanden ist.

Im Folgenden wird die vorliegende Erfindung anhand der beigefügten Figuren beispielhaft beschrieben. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es stellen dar:

Figuren 1A-1C       eine Seitenansicht eines konisch-konvexen Fräsers in Fig. 1A mit einer Vergrößerung des Ausschnitts X des in Fig. 1A dargestellten konisch-konvexen Fräsers in Figuren 1B und 1C;

Figuren 2A-2C      Ausführungen eines konisch-konvexen Fräsers mit (Fig. 2A) und ohne (Fig. 2B, 2C) einem Übergang sowie mit (Fig. 2B) und ohne (Figuren 2A und 2C) Kugelspitze;

Figuren 3A-3D      eine Seitenansicht eines konisch-konvexen Fräsers mit (Figuren 3A und 3B) und ohne (Figuren 3C und 3D) einem Übergang sowie einer Verdeutlichung eines ersten (Figuren 3A und 3C) und eines zweiten Schneidbereichs (Figuren 3B und 3D);

Figuren 4A-4C      beispielhafte mit dem erfindungsgemäßen Verfahren bearbeitete Werkstücke in Form einer Turbinenschaufel (Fig. 4A) mit zugehörigem Rohteil (Fig. 4B) und eines Aerospace-Teils (Fig. 4C);

Figuren 5A-5C      eine Darstellung eines Schruppens eines Rohteilabschnitts mit einem konisch-konvexen Fräser an einem Bearbeitungspunkt anhand von drei perspektivischen Darstellungen;

Figuren 6A-6C      eine Darstellung eines Schruppens eines Rohteilabschnitts mit einem konisch-konvexen Fräser an einem weiteren Bearbeitungspunkt anhand von drei perspektivischen Darstellungen;

Fig. 7      eine perspektivische Ansicht eines Rohteils mit einem geschruppten Rohteilabschnitt;

Figuren 8A-8C      eine Darstellung eines Schlichtens eines geschruppten Rohteilabschnitts mit einem konisch-konvexen Fräser an einem Bearbeitungspunkt anhand von drei perspektivischen Darstellungen;

Figuren 9A-9C      eine Darstellung eines Schlichtens eines geschruppten Rohteilabschnitts mit einem konisch-konvexen Fräser an einem weiteren Bearbeitungspunkt anhand von drei perspektivischen Darstellungen;

Fig. 10      eine Darstellung einer Alternative eines Schlichtens eines geschruppten Rohteilabschnitts mit einem konisch-konvexen Fräser an einem Bearbeitungspunkt;

Fig. 11      eine perspektivische Ansicht eines Rohteils mit einem geschruppten und geschlichteten Rohteilabschnitt;

Figuren 12A-12C      verschiedene Darstellungen zu einer Visualisierung von Fräsbahnen des konisch-konvexen Fräsers beim Schruppen oder/und Schlichten eines Rohteils ohne (Figuren 12A und 12C) und mit (Fig. 12B) Verbindungssegmenten zwischen den Fräsbahnen am Beispiel einer Turbinenschaufel (Figuren 12A und 12B) und eines Aerospace-Teils (Fig. 12C); und

Figuren 13A-13C      Darstellungen weiterer Fräsergeometrien zeigen, die bei der Durchführung des erfindungsgemäßen Verfahrens eingesetzt werden können.

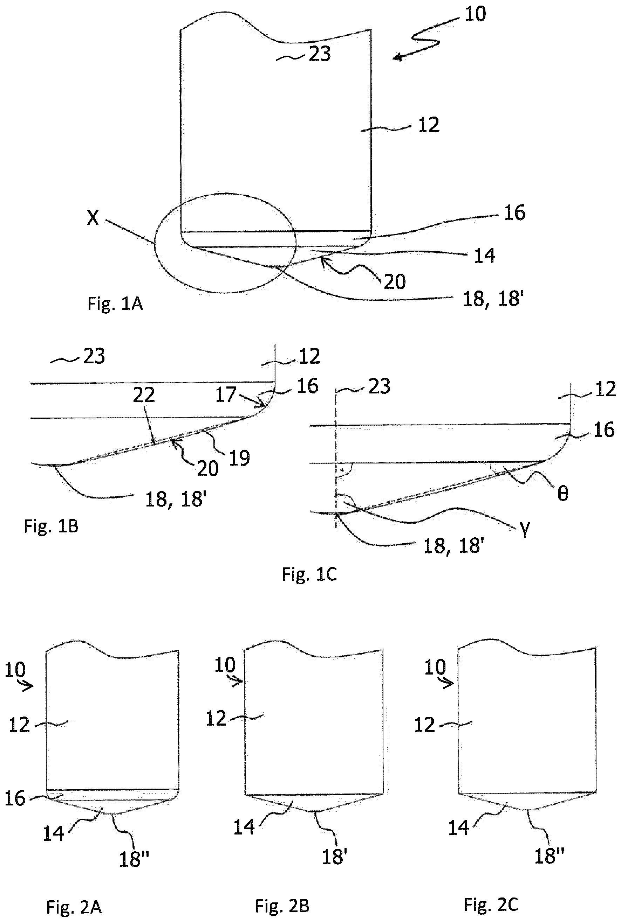

Fig. 1A zeigt einen konisch-konvexen Fräser 10, der zur Durchführung des erfindungsgemäßen Verfahrens geeignet ist. Der Fräser 10 umfasst in diesem Ausführungsbeispiel einen im Wesentlichen zylindrischen Schaft 12 sowie einen konisch-konvexen Fräserabschnitt 14, der in dem in Figuren 1A bis 1C dargestellten Ausführungsbeispiel mittels eines Übergangs 16 mit dem Schaft 12 verbunden ist. Ferner weist der in Fig. 1A dargestellte Fräser 10 eine Spitze 18 in Form einer Kugelspitze 18' an einer verjüngten Endseite des konisch-konvexen Fräserabschnitts 14 auf.

Die konisch-konvexe Form des Fräserabschnitts 14 ist in der vergrößerten Teildarstellung gemäß Fig. 18 verdeutlicht, wobei die gestrichelte Linie 19 einen gedachten geradlinig-konischen Verlauf 19 einer Umfangsfläche eines dem Fräserabschnitt 14 zugrundeliegenden Konus aufzeigt, um einen tatsächlich vorhandenen Krümmungsradius 22 der Umfangsfläche 20 des konisch-konvexen Fräserabschnitts 14 zu verdeutlichen. Der Krümmungsradius 22 des konisch-konvexen Fräserabschnitts kann zwischen 400 mm und 600 mm, bevorzugt zwischen 450 mm und 550 mm, liegen, besonders bevorzugt etwa 500 mm sein.

Ein Konuswinkel $\gamma$ des konisch-konvexen Fräserabschnitts 14 zwischen einer Umfangsfläche eines dem konisch-konvexen Fräserabschnitts 14 zugrundeliegenden Konus, die in Bezug auf den gedachten geradlinigen Verlauf 19 der Umfangsfläche 20 des Fräserabschnitts 14 definiert sein kann, und einer Längsachse des Fräsers 23 durch den konisch-konvexen Fräser 10 kann zwischen 50° und 85° liegen, bevorzugt 75° sein.

Der Übergang 16 zwischen dem Fräserabschnitt 14 und dem Schaft 12 ist optional. Beispiele des Fräsers 10 mit und ohne Übergang 16 sind in Fig. 2A bzw. Figuren 2B und 2C dargestellt. Ferner ist die eingangs erwähnte Kugelspitze 18' optional. Alternativ kann der Fräserabschnitt 14 an seiner vorderen verjüngten Endseite eine flache Spitze 18", wie in den Figuren 2A und 2C dargestellt, oder eine andere als geeignet angesehene Form einer Spitze 18 aufweisen. Es versteht sich, dass das Vorhandensein des Übergangs 16 und die Wahl der Spitze 18 des Fräserabschnitts voneinander unabhängige Merkmale sind, also beispielsweise der in Figur 2A dargestellte Fräser mit Übergang 16 auch eine Kugelspitze 18' aufweisen kann.

Ist der Übergang 16 vorhanden, beträgt vorzugsweise ein Verhältnis eines Übergangsradius 17 zu einem Schaftdurchmesser zwischen 0 % und 30 %, wobei vorzugsweise ein Übergangsradius 17 von 0 % bedeutet, dass kein Übergangsradius 17 zwischen dem Schaft 12 und dem konisch-konvexen Fräserabschnitt 14 vorhanden ist.

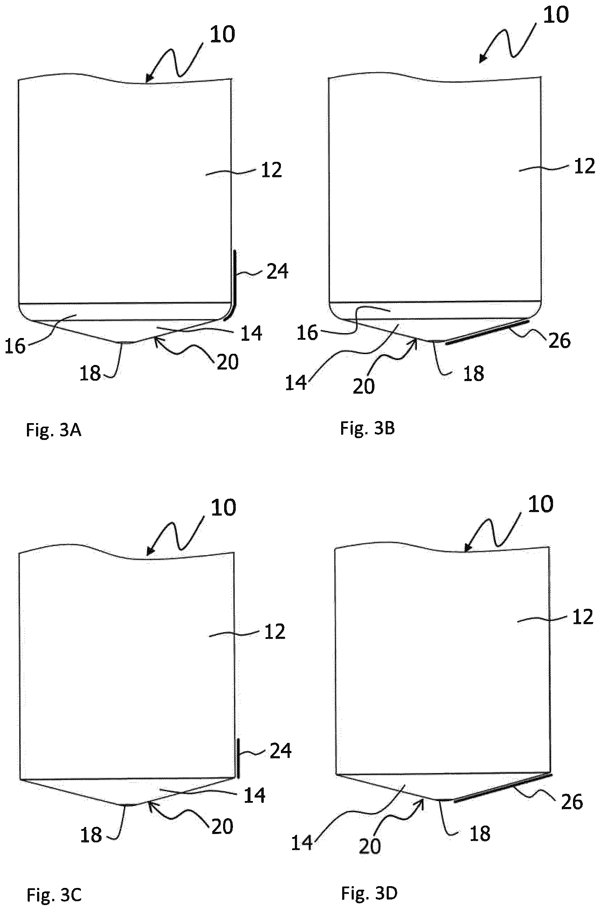

Bei dem erfindungsgemäßen Verfahren werden zwei Schritte durchgeführt, nämlich ein Schritt eines Schruppens und ein Schritt eines Schlichtens. Der konisch-konvexe Fräser 10 kann dafür zwei an den jeweiligen Schritt angepasste Schneidbereiche 24, 26 aufweisen, die in den entsprechenden Verfahrensschritten für eine spanabhebende Bearbeitung verwendet werden können. Der erste Schneidbereich 24 ist an dem Schaft 12 und dann, wenn ein Übergang 16 vorhanden ist, zusätzlich an dem Übergang 16 angeordnet, wie dies in Fig. 3A bzw. Fig. 3C dargestellt ist. Der erste Schneidbereich 24 kann sich lediglich entlang eines Teilbereichs des Schafts 12 erstrecken, wobei sich der Teilbereich des Schafts 12 an den konisch-konvexen Fräserabschnitt 14 bzw., wenn dieser vorhanden ist, an den Übergang 16 anschließt.

Unabhängig von dem Vorhandensein eines Übergangs 16 ist der zweite Schneidbereich 26 an dem konisch-konvexen Fräserabschnitt 14, vorzugsweise an seiner Umfangsfläche 20, vorgesehen, wie in Figuren 3B und 3D ersichtlich.

Im Falle einer Ausbildung des ersten Schneidbereichs 24 aus sowohl dem Schaft 12 als auch dem Übergang 16 kann ein maximaler Durchmesser des konisch-konvexen Fräserabschnitts 14 kleiner als ein Schaftdurchmesser sein. Anderenfalls, wenn kein Übergang 16 vorhanden ist und der erste Schneidbereich 24 ausschließlich an dem Schaft 12 angeordnet ist, kann der maximale Durchmesser des konisch-konvexen Fräserabschnitts 14 gleich dem Schaftdurchmesser sein.

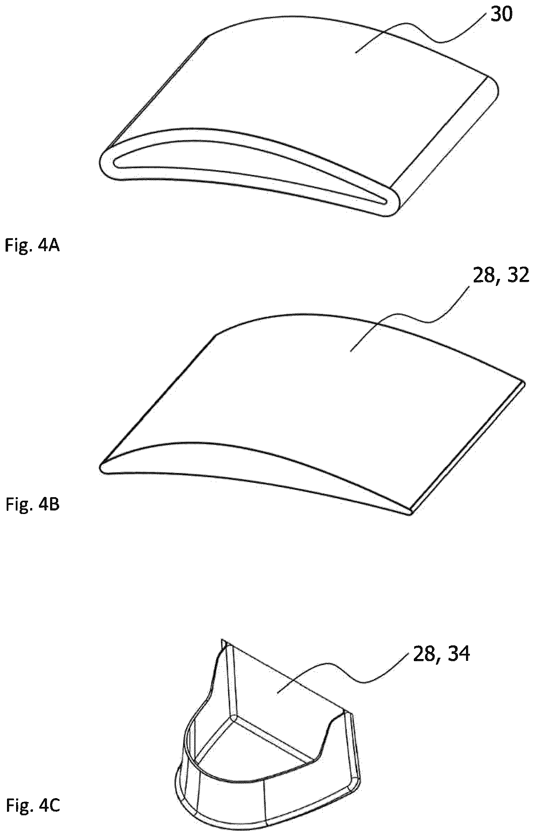

Ein konisch-konvexer Fräser 10, wie vorstehend beschrieben, kann zur Bearbeitung eines beliebigen Rohteils und folglich zur Herstellung eines beliebig dimensionierten und geformten Werkstücks 28 verwendet werden. Beispielsweise kann aus dem in Fig. 4A perspektivisch dargestellten Rohteil 30, bei dem die gewünschte Werkstückgestalt bereits angedeutet ist, verwendet werden, um das in Fig. 4B dargestellte Werkstück 28 in Form einer Turbinenschaufel 32 herzustellen. Es versteht sich, dass das Rohteil 30 eine beliebige Form aufweisen kann, beispielsweise auch quarterförmig sein kann. Alternativ zeigt Fig. 4C ein Werkstück 28 in Form eines Aerospace-Teils 34, das gleichermaßen mit dem erfindungsgemäßen Verfahren herstellbar ist.

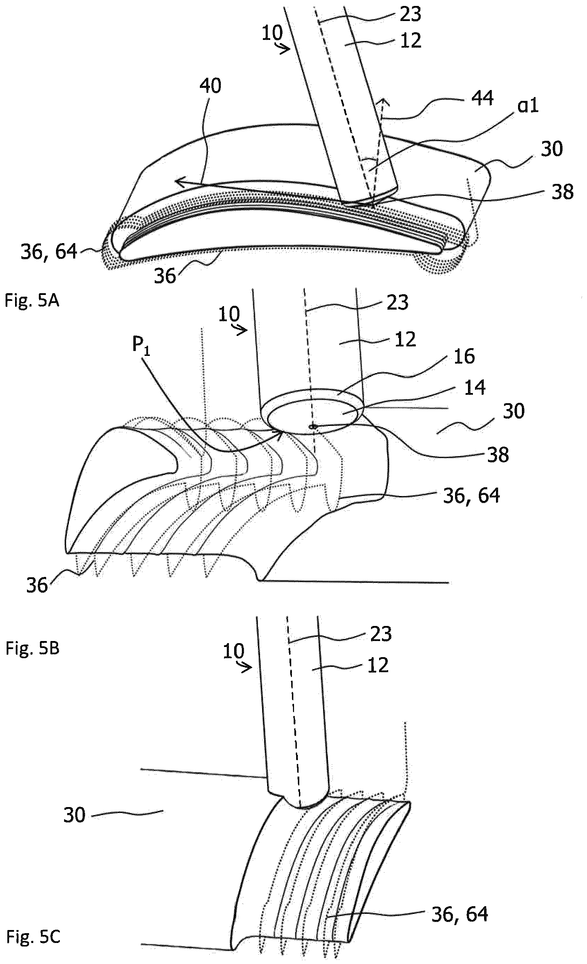

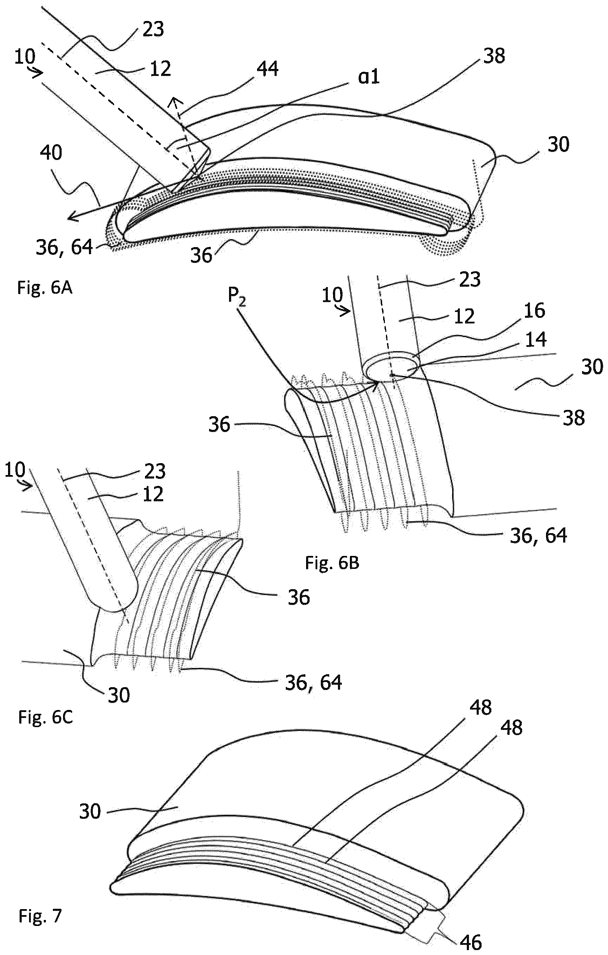

Im Folgenden soll der Verfahrensschritt des Schruppens anhand der Figuren 5A-5C sowie 6A-6C näher erläutert werden. Wie in diesen Figuren ersichtlich, ist beim Schruppen der konisch-konvexe Fräser 10 mit seinem ersten Schneidbereich 24 in Eingriff mit dem Rohteil 30. In Figuren 5A-5C ist ein Bearbeitungspunkt $P_1$ des Verfahrens dargestellt, bei dem bereits ein Teilbereich des Rohteils 30 geschruppt wurde und daher gegenüber dem nicht geschruppten Teilbereich eine verringerte Materialdicke aufweist.

Eine Visualisierung des vom Fräser 10 absolvierten Fräsvorgangs kann mittels einer Fräsbahn 36 erfolgen, die sich auf einen Referenzpunkt 38 an dem Fräser 10, beispielsweise in dem in Figuren 5A bis 5C dargestellten Ausführungsbeispiel, auf eine Spitze des konisch-konvexen Fräserabschnitts 14, beziehen kann. In den Figuren 5A bis 5C ist die jeweilige Fräsbahn gestrichelt dargestellt und zeigt den Verlauf des Fräsers 10 beim Schruppen des Rohteils 30 bis zu dem dargestellten Bearbeitungspunkt $P_1$ an.

Der in Bezug auf Figuren 5A bis 5B dargestellte erste Bearbeitungswinkelbereich des Fräsers 10 an dem Bearbeitungspunkt $P_1$ umfasst eine winkelmäßige Anstellung des Fräsers 10 in einer aktuellen Vorschubrichtung 40 an dem Referenzpunkt 38 um einen ersten Sturzwinkel $\alpha 1$. Der erste Sturzwinkel $\alpha 1$ kann zwischen der gestrichelt dargestellten Längsachse des Fräsers 23 und einer mit einem gestrichelten Pfeil dargestellten Oberflächennormalen 44 an einem Bearbeitungspunkt $P_1$ des Rohteils 30 festgelegt sein und ein Kippen des Fräsers 10 in Vorschubrichtung 40 anzeigen. Die Vorschubrichtung 40 an dem Bearbeitungspunkt $P_1$ ist im Allgemeinen senkrecht zu der Oberflächennormalen 44 an diesem Bearbeitungspunkt $P_1$. Der erste Sturzwinkel $\alpha 1$ ist vorzugsweise derart zu wählen, dass der zweite Schneidbereich 26 des Fräsers 10 beim Schruppen des Rohteils 30 passiv bleibt. Dies ist beispielsweise in den Figuren 5A bis 5C ersichtlich, bei denen der konisch-konvexe Fräserabschnitt 14 nicht in Eingriff mit Material des Rohteils 30 steht. Der Betrag, um welchen der Sturzwinkel $\alpha 1$ größer sein kann als ein Umfangsflächenwinkel $\theta$, kann von dem Krümmungsradius 22 des konisch-konvexen Fräserabschnitts 14 abhängen. Beispielsweise kann der Betrag umso größer sein, je kleiner der Krümmungsradius 22 ist, d.h. je stärker die Wölbung des konisch-konvexen Fräserabschnitts 14 ist.

In einem weiteren (nicht dargestellten) Ausführungsbeispiel kann beim Schruppen der Fräser 10 nicht nur um den ersten Sturzwinkel $\alpha 1$ in Vorschubrichtung 40 gekippt sein, sondern auch seitlich zu diesem um einen ersten Neigungswinkel $\beta 1$ geneigt sein. Die seitliche Neigung kann abhängig von dem zu bearbeitenden Rohteil 30 bzw. entstehenden Werkstück 28 gewählt werden und die Schnittbedingungen verbessern oder auch zur Kollisionsvermeidung wesentlich sein. In diesem Ausführungsbeispiel umfasst der erste Bearbeitungswinkelbereich sowohl ein Kippen des Fräsers 10 in Vorschubrichtung 40 um einen ersten Sturzwinkel $\alpha1$ als auch ein Neigen von diesem seitlich, beispielsweise quer, dazu um einen ersten Neigungswinkel $\beta1$.

Das Schruppen des Rohteils 30 an einem weiteren Bearbeitungspunkt $P_2$ ist in Figuren 6A bis 6C dargestellt, die in ihren jeweiligen perspektivischen Darstellungen denjenigen in Figuren 5A bis 5C entsprechen, sodass die vorherigen Ausführungen zu Figuren 5A bis 5C analog auf Figuren 6A bis 6C zutreffen. Der erste Sturzwinkel $\alpha1$ kann an verschiedenen Bearbeitungspunkten $P_1$, $P_2$ des Rohteils 30 unterschiedlich sein, kann jedoch auch während der Bearbeitung des gesamten Rohteils 30 oder innerhalb eines Abschnitts davon gleich sein. Der an dem weiteren Bearbeitungspunkt $P_2$ vorherrschende erste Sturzwinkel $\alpha1$ ist ferner analog zu den vorherigen Ausführungen zu Fig. 5A definiert, nämlich als ein Kippen des Fräsers 10 an dem weiteren Bearbeitungspunkt $P_2$ in der aktuellen Vorschubrichtung 40, wobei der erste Sturzwinkel $\alpha1$ zwischen der Längsachse des Fräsers 23 und der Oberflächennormalen 44 an dem Referenzpunkt 38 definiert sein kann.

Bei der spanabhebenden Bearbeitung eines Rohteils 30, wie beispielsweise einer Turbinenschaufel 32, mit einer geringen Dicke im Vergleich zur Länge und Breite kann es von Vorteil sein, das Rohteil 30 abschnittsweise zu bearbeiten, um unerwünschte Schwingungen des Rohteils 30 während des Schruppens oder/und Schlichtens aufgrund der Bewegungen des Fräsers 10 zu vermeiden. Ein Rohteil 30, bei dem lediglich ein Rohteilabschnitt 46 des Rohteils 30 geschruppt ist, ist in Fig. 7 dargestellt. Die in diesem Rohteilabschnitt 46 sichtbaren Rillen 48 ergeben sich aus einem gewählten Schruppaufmaß, das abschnittsübergreifend oder auch innerhalb eines Abschnitts variieren kann.

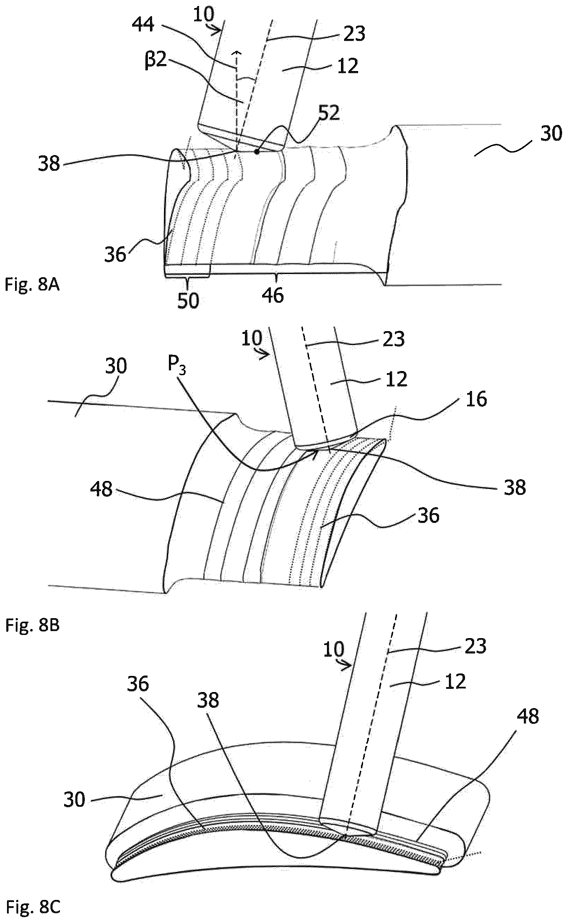

An das Schruppen des Rohteilabschnitts 46 kann sich das Schlichten dieses Rohteilabschnitts 46 oder zumindest eines Teilbereichs davon anschließen. Eine Visualisierung des Schlichtens an einem Bearbeitungspunkt $P_3$ ist in Figuren 8A bis 8C dargestellt, bei dem bereits ein Teilbereich 50 des Rohteilabschnitts 46 geschlichtet ist. Die Fräsbahn 36, die auch in diesem Beispiel auf die Spitze des konisch-konvexen Fräserabschnitts 14 referenziert ist, zeigt das bis zu dem dargestellten Bearbeitungspunkt durchgeführte Schlichten an.

Während des Schlichtens steht der zweite Schneidbereich 26 des konisch-konvexen Fräsers 10 in Eingriff mit Material des geschruppten Rohteilabschnitts 46, wobei vorzugsweise ein Umfangsfläche-Abschnitt der Umfangsfläche 20 des konisch-konvexen Fräserabschnitts 14 zu schlichtendes Material kontaktiert. Dieser Umfangsfläche-Abschnitt der Umfangsfläche 20 erstreckt sich beispielsweise zwischen der Spitze 18 des Fräserabschnitts 14 und dem Übergang 16 oder, wenn kein Übergang 16 vorhanden ist, dem Schaft 12. Ein Kontaktpunkt 52 zwischen dem Umfangsfläche-Abschnitt und dem bereits geschruppten und geschlichteten Rohteilabschnitt 46 bzw. dem Werkstück ist in Fig. 8A mittels eines Kontaktpunktes 52 hervorgehoben. Eine genaue Lage des Kontaktpunkts 52 an dem Umfangsfläche-Abschnitt innerhalb des zweiten Schneidbereichs 26 kann über die Wahl des seitlichen zweiten Neigungswinkels $\beta2$ feinjustiert werden.

In dem dargestellten Beispiel wurde das Schruppaufmaß etwas größer gewählt, sodass während des Schlichtens mit dem zweiten Schneidbereich 26 auch ein Schruppen mit dem ersten Schneidbereich 24 erfolgt, wie dies beispielsweise in Fig. 8A ersichtlich ist. Formgebend ist dennoch in diesem Fall ausschließlich der zweite Schneidbereich 26 und nicht der erste Schneidbereich 24.

Der in Bezug auf Figuren 8A bis 8C dargestellte zweite Bearbeitungswinkelbereich des konisch-konvexen Fräsers 10 an dem Bearbeitungspunkt $P_3$ umfasst eine Anstellung des Fräsers 10 seitlich zu einer aktuellen Vorschubrichtung 40 an dem Referenzpunkt 38 um einen zweiten Neigungswinkel $\beta2$. Der zweite Neigungswinkel $\beta2$ kann zwischen der gestrichelt dargestellten Längsachse des Fräsers 23 und der mit einem gestrichelten Pfeil dargestellten Oberflächennormalen 44 festgelegt sein und ein Neigen des Fräsers 10 seitlich zu der aktuellen Vorschubrichtung 40 des Fräsers 10 an dem Bearbeitungspunkt $P_3$ anzeigen. Der zweite Neigungswinkel $\beta2$ ist vorzugsweise derart zu wählen, dass der zweite Schneidbereich 26 des Fräsers 10 beim Schlichten in Material des geschruppten Rohteilabschnitts 46 eingreift.

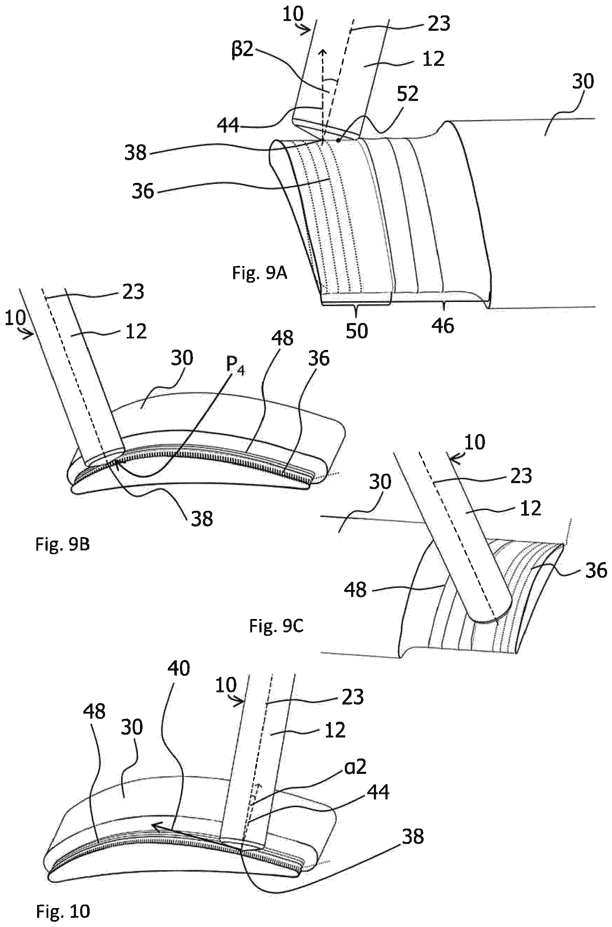

Das Schlichten des geschruppten Rohteilabschnitts 46 an einem weiteren Bearbeitungspunkt $P_4$ ist in Figuren 9A bis 9C dargestellt, die in ihren jeweiligen perspektivischen Darstellungen denjenigen in Figuren 8A bis 8C entsprechen, sodass die vorherigen Ausführungen zu Figuren 8A bis 8C analog auf Figuren 9A bis 9C zutreffen. Der zweite Neigungswinkel $\beta2$ kann an verschiedenen Bearbeitungspunkten $P_3$, $P_4$ des geschruppten Rohteils 46 unterschiedlich sein, er kann jedoch auch während der Bearbeitung des geschruppten Rohteilabschnitts 46 oder eines Teilbereichs davon gleich sein und unverändert bleiben. Der an dem weiteren Bearbeitungspunkt $P_4$ vorliegende zweite Neigungswinkel $\beta2$ ist ferner analog zu den vorherigen Ausführungen zu Fig. 8A definiert, nämlich als ein Neigen des Fräsers 10 an dem weiteren Bearbeitungspunkt $P_4$ seitlich zu der aktuellen Vorschubrichtung 40 des Fräsers 10, wobei der zweite Neigungswinkel $\beta2$ zwischen der Längsachse des Fräsers 23 und der Oberflächennormalen 44 an dem Referenzpunkt 38 definiert sein kann.

In einem weiteren in Fig. 10 dargestellten Ausführungsbeispiel kann beim Schlichten der Fräser 10 nicht nur um den zweiten Neigungswinkel $\beta2$ geneigt sein, sondern auch um einen zweiten Sturzwinkel $\alpha2$ in der aktuellen Vorschubrichtung 40 gekippt sein. Der zweite Sturzwinkel $o2$ in Vorschubrichtung 40 kann zwischen der Längsachse des Fräsers 23 und der Oberflächennormalen 44 an dem Referenzpunkt 38 definiert sein. In diesem Ausführungsbeispiel wird der zweite Bearbeitungswinkelbereich folglich von zwei Winkeln bestimmt, dem zweiten Sturzwinkel $\alpha 2$ in Vorschubrichtung und dem zweiten Neigungswinkel $\beta 2$ seitlich, beispielsweise quer, dazu.

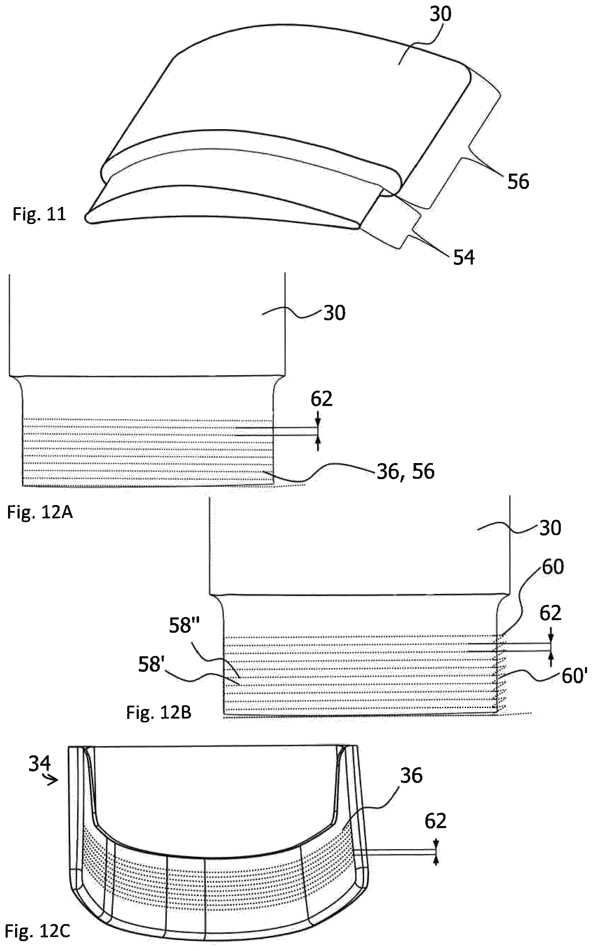

Im Allgemeinen kann ein erster Sturzwinkelbereich, in dem der erste Sturzwinkel $\alpha 1$ für das Schruppen festgelegt werden kann, einen zweiten Sturzwinkelbereich, in dem der zweite Sturzwinkel $\alpha 2$ für das Schlichten festgelegt werden kann, überlappen. Alternativ oder zusätzlich kann ein erster Neigungswinkelbereich, in dem der erste Neigungswinkel $\beta 1$ für das Schruppen festgelegt werden kann, einen zweiten Neigungswinkelbereich, in dem der zweite Neigungswinkel $\beta 2$ für das Schlichten festgelegt werden kann, überlappen. Alternativ können die angesprochenen Sturzwinkelbereiche oder/und Neigungswinkelbereiche voneinander getrennte Bereiche sein. Ein Rohteil 30 mit dem geschruppten und geschlichteten Rohteilabschnitt 54 und einem unbearbeiteten Rohteilabschnitt 56 ist in Fig. 11 dargestellt. Die Bearbeitung des Rohteilabschnitts 56 kann durch Schruppen und Schlichten, wie zuvor ausgeführt, erfolgen. Vorzugsweise wird dazu ein weiterer Rohteilabschnitt zunächst geschruppt und anschließend geschlichtet. Das Schruppen und anschließende Schlichten eines Rohteilabschnitts kann fortgeführt werden, bis alle Rohteilabschnitte des Rohteils geschruppt und geschlichtet sind, also das fertig bearbeitete Werkstück 28 vorliegt. Eine solche alternierende, abschnittsweise Bearbeitung des Rohteils 30 kann dessen Stabilität beim Fräsen erhöhen.

In anderen Worten ausgedrückt werden die Schritte des Schruppens und des Schlichtens in dieser Reihenfolge ausgeführt und ggf. an einem weiteren, beispielsweise sich anschließendem Rohteilabschnitt, wiederholt. Dieses Vorgehen ist für die Herstellung von Turbinenschaufeln 32 besonders geeignet, wobei das Schlichten vorzugsweise nur an zuvor geschruppten Rohteilabschnitten erfolgt.

Es versteht sich, dass alternativ auch zunächst das gesamte Rohteil geschruppt und anschließend geschlichtet werden kann. Diese Vorgehensweise ist jedoch lediglich dann empfehlenswert, wenn das geschruppte Rohteil noch eine hinreichende Stabilität aufweist, um bei dem sich anschließenden Schlichten einem Schwingen entgegenzuwirken.

Ferner ist es von Vorteil, wenn das Schlichten nicht zu nah an einem Übergangsbereich zwischen einem geschruppten und einem nicht-geschruppten Rohteilabschnitt erfolgt, da an diesem Übergangsbereich noch vergleichsweise viel Material vorhanden sein kann. Würde dieses Material beim Schlichten erfasst, könnte die Lebensdauer des Fräsers aufgrund einer erhöhten Beanspruchung verringert werden. Folglich kann der geschlichtete Rohteilabschnitt kleiner sein als der zuvor geschruppte Rohteilabschnitt. Es versteht sich, dass der letzte geschruppte Rohteilabschnitt vollständig geschlichtet werden kann.

Im Folgenden werden für das Schruppen und Schlichten verwendbare Fräsbahnen 36 unter Bezugnahme auf die Darstellungen in Figuren 12A bis 12C erläutert. Die Fräsbahn 36 kann, wie in Fig. 12A dargestellt, geschlossen sein und beispielsweise eine durchgängige Spirale 56 sein. In anderen Worten ausgedrückt, der Fräser 10 kann beim Schruppen oder/und Schlichten kontinuierlich, vorzugsweise vollständig, umlaufend um das Rohteil 30 bzw. das geschruppte Rohteil 46 geführt werden und dabei vorzugsweise kontinuierlich das Rohteil 30 kontaktieren. Eine Umlaufrichtung der Fräsbahn 36 kann dabei beim Schruppen oder/und beim Schlichten beliebig sein.

Alternativ können die Fräsbahnen 36, wie in Fig. 12B dargestellt, voneinander getrennte Fräsbahnen 58 sein, die mittels Verbindungssegmenten 60 zwischen den Fräsbahnen 58 miteinander verbunden sein können. In anderen Worten ausgedrückt, der Fräser 10 kann beim Schruppen oder/und Schlichten das Rohteil 30 bzw. das geschruppte Rohteil 46 entlang einer Fräsbahn 58' umlaufen, dann außer Eingriff mit dem Rohteil 30 bzw. geschruppten Rohteil 46 gebracht und entlang eines Verbindungsegments 60' geführt werden, um anschließend erneut mit dem Rohteil 30 bzw. geschruppten Rohteil 46 in Eingriff zu gelangen und entlang einer weiteren Fräsbahn 58" um das Rohteil 30 bzw. geschruppte Rohteil 46 geführt zu werden. Vorzugsweise verlaufen dabei die Fräsbahnen 58 parallel zueinander und voneinander getrennt. Der Fräser 10 kann also mittels der Verbindungelemente 60 kontinuierlich um das Werkstück 28 geführt werden.

Unabhängig von einem Verlauf der Fräsbahn(en) 36, 56, 58 kann ein Bahnabstand 62 zwischen diesen festgelegt werden, beispielsweise zwischen Umläufen der kontinuierlichen Spirale 56 oder der voneinander getrennten Fräsbahnen 58. Dieser errechnet sich beispielsweise aus der Werkzeuggeometrie und der gewünschten Genauigkeit. Es versteht sich, dass eine Kontur, beispielsweise die Kontur 48 nach dem Schruppen, bei einem geringeren Bahnabstand 62 glatter sein kann als bei einem größeren.

Ferner zeigt Fig. 12C mögliche Fräsbahnen 36 an einem Aerospace-Teil 34, die um den Bahnabstand 62 beabstandet sind und von einer Seite zur anderen führen. Die Fräsbahnen 36 sind in diesem Beispiel nicht umlaufend und vorzugsweise beidseitig offen.

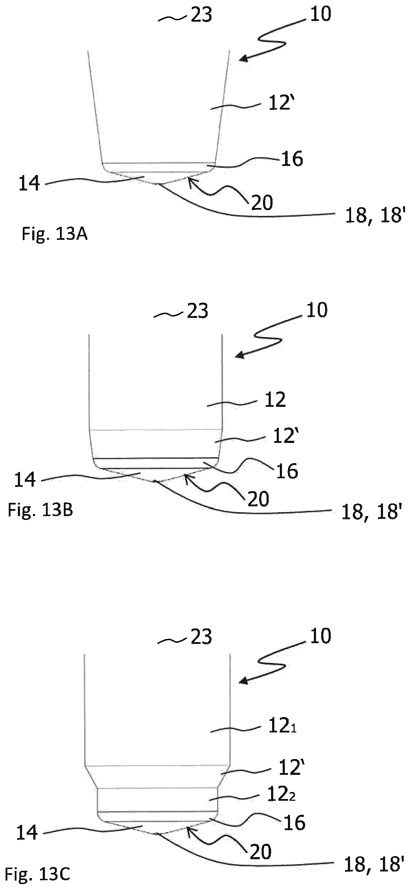

Figuren 13A bis 13C zeigen neben der Fräsergeometrie gemäß vorstehender Beschreibung mit Bezug auf die Figuren 1 bis 3 weitere alternative Fräsergeometrien. Es werden dieselben Bezugszeichen für gleiche Komponenten wie vorstehend verwendet, jedoch gilt ergänzend die folgende Beschreibung.

Fig. 13A zeigt einen Fräser 10 mit einem im wesentlichen konischen Schaft 12', der über den Übergang 16 in den konisch-konvexen Fräserabschnitt 14 übergeht.

Fig. 13B zeigt einen Fräser 10 mit einem im wesentlichen zylindrischen Schaftabschnitt 12, der unmittelbar, also ohne gerundeten Übergang, in einen konischen Schaftabschnitt 12' übergeht. An den konischen Schaftabschnitt 12' schließt sich dann der Übergang 16 an, der in den konisch-konvexen Fräserabschnitt 14 übergeht.

Fig. 13C zeigt einen Fräser 10 mit einem ersten im wesentlichen zylindrischen Schaftabschnitt $12_1$, der unmittelbar, also ohne gerundeten Übergang, in einen konischen Schaftabschnitt 12' übergeht. An den konischen Schaftabschnitt 12' schließt sich wiederum unmittelbar ein zweiter im wesentlichen zylindrischer Schaftabschnitt $12_2$ mit geringerem Durchmesser an. Dieser geht über den Übergang 16 in den konisch-konvexen Fräserabschnitt 14 über.

## Patentansprüche

1. Verfahren zum Herstellen eines Werkstücks (28), insbesondere einer Turbinenschaufel (32), mit einem Fräswerkzeug (10), das als konisch-konvexer Fräser (10) ausgebildet ist,

   wobei der konisch-konvexe Fräser (10) umfasst:

   - einen Schaft (12) und
   - einen endseitig mit dem Schaft (12) unmittelbar oder mittels eines Übergangs (16) verbundenen konisch-konvexen Fräserabschnitt (14),

   wobei der konisch-konvexe Fräser (10) einen ersten und einen zweiten Schneidbereich (24, 26) aufweist, wobei der erste Schneidbereich (24) an dem Schaft (12) oder/und an dem Übergang (16) vorgesehen ist, und wobei der zweite Schneidbereich (26) an dem konisch-konvexen Fräserabschnitt (14) vorgesehen ist,
   wobei das Verfahren die folgenden Schritte umfasst:

   A) Schruppen eines Rohteilabschnitts (30) mit dem konisch-konvexen Fräser (10), wobei dieser relativ zu einer aktuellen Vorschubrichtung (40) an einem Referenzpunkt (38) des konisch-konvexen Fräsers (10) derart innerhalb eines ersten Bearbeitungswinkelbereichs ($\alpha$1, $\beta$1) angestellt wird, dass eine spanabhebende Bearbeitung mit dem ersten Schneidbereich (24) des konisch-konvexen Fräsers (10) erfolgt, wobei der zweite Schneidbereich (26) bei der spanabhebenden Bearbeitung passiv bleibt, und
   B) Schlichten zumindest eines Teils des geschruppten Rohteilabschnitts (46) mit dem konisch-konvexen Fräser (10), wobei dieser gegenüber der aktuellen Vorschubrichtung (40) an dem Referenzpunkt (38) des konisch-konvexen Fräsers (10) derart innerhalb eines zweiten Bearbeitungswinkelbereichs ($\alpha$2, $\beta$2) angestellt wird, dass eine spanabhebende Bearbeitung mit dem zweiten Schneidbereich (26) des konisch-konvexen Fräsers (10) erfolgt, wobei der zweite Schneidbereich (26) zur spanabhebenden Bearbeitung an dem Rohteil (30) angreift.

2. Verfahren nach Anspruch 1, **dadurch gekennzeichnet, dass** der konisch-konvexe Fräser (10) während der Schritte A) des Schruppens und B) des Schlichtens innerhalb des ersten Bearbeitungswinkelbereichs ($\alpha$1, $\beta$1) bzw. des zweiten Bearbeitungswinkelbereichs ($\alpha$2, $\beta$2) variabel bewegbar ist.

3. Verfahren nach Anspruch 1 oder 2, **dadurch gekennzeichnet, dass** sich der erste ($\alpha$1, $\beta$1) und der zweite ($\alpha$2, $\beta$2) Bearbeitungswinkelbereich überlappen oder diese aneinander angrenzen oder deren Bearbeitungswinkelbereiche betragsmäßig voneinander beabstandet sind.

4. Verfahren nach einem der Ansprüche 1 bis 3, **dadurch gekennzeichnet, dass** die Schritte A) des Schruppens und B) des Schlichtens alternierend an unterschiedlichen, vorzugsweise aneinander angrenzenden, Rohteilabschnitten (30, 46) durchgeführt werden.

5. Verfahren nach einem der Ansprüche 1 bis 4, **dadurch gekennzeichnet, dass** der konisch-konvexe Fräser (10) während des Schrittes A) des Schruppens innerhalb des ersten Bearbeitungswinkelbereichs ($\alpha$1, $\beta$1) in Richtung der Vorschubrichtung (40) des konisch-konvexen Fräsers (10) um einen ersten Sturzwinkel ($\alpha$1) gekippt wird.

6. Verfahren nach einem der Ansprüche 1 bis 5, **dadurch gekennzeichnet, dass** der konisch-konvexe Fräser (10) in Schritt B) beim Schlichten innerhalb des zweiten Bearbeitungswinkelbereichs ($\alpha$2, $\beta$2) in Richtung einer Vorschubrichtung (40) des Fräsers (10) um einen zweiten Sturzwinkel ($\alpha$2) gekippt ist.

7. Verfahren nach einem der Ansprüche 1 bis 6, **dadurch gekennzeichnet, dass** der konisch-konvexe Fräser (10) in Schritt A) beim Schruppen innerhalb des ersten Bearbeitungswinkelbereichs ($\alpha$1, $\beta$1) seitlich zur Vorschubrichtung (40) um einen ersten Neigungswinkel ($\beta$1) geneigt ist und/oder der Fräser in Schritt B) beim Schlichten innerhalb des zweiten Bearbeitungswinkelbereichs ($\alpha$2, $\beta$2) seitlich zur Vorschubrichtung um einen zweiten Neigungswinkel

($\beta$2) geneigt ist.

8. Verfahren nach einem der Ansprüche 1 bis 7, **dadurch gekennzeichnet, dass** in Schritt A) während des Schruppens oder/und in Schritt B) während des Schlichtens eine Relativbewegung zwischen dem konisch-konvexen Fräser (10) und dem Rohteil (30) kontinuierlich erfolgt, wobei

- der konisch-konvexe Fräser (30) um das Rohteil bzw. das geschruppte Rohteil oder/und
- das Rohteil (30) bzw. das geschruppte Rohteil (46) relativ zu dem konisch-konvexen Fräser (10) entlang definierter Fräsbahnen (36, 56, 58) kontinuierlich geführt wird.

9. Verfahren nach Anspruch 8, **dadurch gekennzeichnet, dass** sich die Fräsbahnen (36, 56, 58) in Schritt A) beim Schruppen und in Schritt B) beim Schlichten voneinander unterscheiden.

10. Verfahren nach Anspruch 8 oder 9, **dadurch gekennzeichnet, dass** die Fräsbahnen (36, 56, 58) in Schritt A) während des Schruppens und in Schritt B) während des Schlichtens um einen definierten Bahnabstand (62) voneinander beabstandet sind, wobei die Bahnabstände (62) in Schritt A) während des Schruppens und in Schritt B) während des Schlichtens identisch sind oder sich voneinander unterscheiden.

11. Verfahren nach einem der Ansprüche 1 bis 10, **dadurch gekennzeichnet, dass** ein Konuswinkel ($\gamma$) zwischen einer Längsachse (23) des Fräsers und einer Umfangsfläche (19) eines dem konisch-konvexen Fräserabschnitt (14) zugrundeliegenden Konus in einem Winkelbereich von 50° bis 85° liegt, besonders bevorzugt etwa 70° beträgt.

12. Verfahren nach einem der Ansprüche 1 bis 11, **dadurch gekennzeichnet, dass** ein Verhältnis von einem Übergangsradius (17) zu einem Schaftdurchmesser zwischen 0 % und 30 % beträgt und/oder ein Verhältnis des Krümmungsradius (22) einer Umfangsfläche (20) des konisch-konvexen Fräserabschnitts (14) zu einem Schaftdurchmesser des Fräsers (10) 2 bis 50 beträgt.

13. Verfahren nach einem der Ansprüche 1 bis 12, **dadurch gekennzeichnet, dass** der Übergang (16) zwischen dem Schaft (12) und dem konisch-konvexen Fräserabschnitt (14) stetig, stufenweise oder scharf ist.

14. Verfahren nach einem der Ansprüche 1 bis 13, **dadurch gekennzeichnet, dass** der Schaft im wesentlichen zylindrisch ausgebildet ist, oder im wesentlichen konisch ausgebildet ist, oder konisch-zylindrisch ausgebildet, ist oder sich aus verschiedenen konischen sowie zylindrischen Abschnitten zusammensetzt.

15. Verfahren nach einem der Ansprüche 1 bis 14, **dadurch gekennzeichnet, dass** sich der konisch-konvexe Fräserabschnitt (14) zu einer Spitze (18, 18', 18") oder einer Endfläche verjüngt oder eine zusätzliche kugelförmige Spitze (18') an dem freiliegenden Ende des konisch-konvexen Fräserabschnitts (14) vorhanden ist.

**Claims**

1. A method for manufacturing a workpiece (28), in particular a turbine blade (32), using a milling tool (10) configured as a conically convex milling cutter (10),

wherein the conically convex milling cutter (10) comprises

- a shank (12) and
- a conically convex milling cutter portion (14) connected at the end to the shank (12) directly or through a transition (16),

wherein the conically convex milling cutter (10) has a first and a second cutting area (24, 26), wherein the first cutting area (24) is provided on the shank (12) or/and at the transition (16), and wherein the second cutting area (26) is provided on the conically convex milling cutter portion (14),
wherein the method comprises the following steps:

A) roughing a blank portion (30) using the conically convex milling cutter (10), wherein the latter is inclined relative to a current feed direction (40) at a reference point (38) of the conically convex milling cutter (10) within a first machining angle range ($\alpha$1, $\beta$1) such that machining is performed with the first cutting area (24) of the conically convex milling cutter (10), wherein the second cutting area (26) remains passive during machining, and

B) finishing at least a part of the rough blank portion (46) using the conically convex milling cutter (10), wherein the latter is inclined relative to the current feed direction (40) at the reference point (38) of the conically convex milling cutter (10) within a second machining angle range ($\alpha$2, $\beta$2) in such a way that machining is performed with the second cutting area (26) of the conically convex milling cutter (10), wherein the second cutting area (26) engages with the blank (30).

2. The method of claim 1, **characterized in that** the conically convex milling cutter (10) is variably movable during step A) of roughing and step B) of finishing within the first machining angle range ($\alpha$1, $\beta$1) and the second machining angle range ($\alpha$2, $\beta$2), respectively.

3. The method of claim 1 or 2, **characterized in that** the first ($\alpha$1, $\beta$1) and the second ($\alpha$2, $\beta$2) machining angle ranges overlap or are adjacent to each other or their machining angle ranges are spaced from each other by an amount.

4. The method of any one of claims 1 to 3, **characterized in that** step A) of roughing and step B) of finishing are carried out alternately on different, preferably adjacent, blank portions (30, 46).

5. The method of any one of claims 1 to 4, **characterized in that** the conically convex milling cutter (10) is tilted at a first camber angle ($\alpha$1) in the direction of the feed direction (40) of the conically convex milling cutter (10) during roughing step A) within the first machining angle range ($\alpha$1, $\beta$1).

6. The method of any one of claims 1 to 5, **characterized in that** the conically convex milling cutter (10) is tilted at a second camber angle ($\alpha$2) in the direction of the feed direction (40) of the milling cutter (10) during finishing step B) within the second machining angle range ($\alpha$2, $\beta$2).

7. The method of any one of claims 1 to 6, **characterized in that** in step A), the conically convex milling cutter (10) is inclined laterally with respect to the feed direction (40) at a first inclination angle ($\beta$1) during roughing within the first machining angle range ($\alpha$1, $\beta$1) and/or that in step B), the milling cutter is inclined laterally with respect to the feed direction at a second inclination angle ($\beta$2) during finishing within the second machining angle range ($\alpha$2, $\beta$2).

8. The method of any one of claims 1 to 7, **characterized in that** in step A) during roughing or/and in step B) during finishing, a relative movement between the conically convex milling cutter (10) and the blank (30) takes place continuously, wherein

- the conically convex milling cutter (30) moves around the blank or the rough blank or/and
- the blank (30) or the rough blank (46) is continuously guided relative to the conically convex milling cutter (10) along defined milling paths (36, 56, 58).

9. The method of claim 8, **characterized in that** the milling paths (36, 56, 58) differ from each other in step A) during roughing and in step B) during finishing.

10. The method of claim 8 or 9, **characterized in that** the milling paths (36, 56, 58) are spaced apart from each other by a defined path distance (62) in step A) during roughing and in step B) during finishing, wherein the path distances (62) are identical or different from each other in step A) during roughing and in step B) during finishing.

11. The method of any one of claims 1 to 10, **characterized in that** a cone angle ($\gamma$) between a longitudinal axis (23) of the milling cutter and a circumferential surface (19) of a cone underlying the conically convex milling cutter portion (14) is in an angular range of 50° to 85°, particularly preferably approx. 70°.

12. The method of any one of claims 1 to 11, **characterized in that** a ratio of a transition radius (17) to a shank diameter is between 0% and 30% and/or that a ratio curvature radius (22) of a peripheral surface (20) of the conically convex milling cutter portion (14) to a shank diameter of the milling cutter (10) is 2 to 50.

13. The method of any one of claims 1 to 12, **characterized in that** the transition (16) between the shank (12) and the conically convex milling cutter portion (14) is continuous, gradual or sharp.

14. The method of one of claims 1 to 13, **characterized in that** the shank is configured substantially cylindrical or is configured substantially conical or is configured conical-cylindrical or is composed of different conical portions and cylindrical portions.

15. The method of any one of claims 1 to 14, **characterized in that** the conically convex milling cutter portion (14) tapers toward a tip (18, 18', 18") or an end face, or an additional ball-shaped tip (18') is present at the exposed end of the conically convex milling cutter portion (14).


**Revendications**

1. Procédé de fabrication d'une pièce (28), en particulier d'une aube de turbine (32), avec un outil de fraisage (10) qui est réalisé sous la forme d'une fraise conique-convexe (10),

    dans lequel la fraise conique-convexe (10) comprend :

       - une tige (12) et
       - une section de fraise conique-convexe (14) reliée côté extrémité à la tige (12) directement ou au moyen d'une transition (16),

    dans lequel la fraise conique-convexe (10) présente une première et une deuxième zone de coupe (24, 26), la première zone de coupe (24) étant prévue sur la tige (12) ou/et sur la transition (16), et la deuxième zone de coupe (26) étant prévue sur la section de fraise conique-convexe (14),
    le procédé comprenant les étapes suivantes :

       A) ébauche d'une section de pièce brute (30) avec la fraise conique-convexe (10), celle-ci étant placée par rapport à une direction d'avance actuelle (40) à un point de référence (38) de la fraise conique-convexe (10) à l'intérieur d'une première plage angulaire d'usinage ($\alpha$1, $\beta$1), de telle sorte qu'un usinage par enlèvement de copeaux soit effectué avec la première zone de coupe (24) de la fraise conique-convexe (10), la deuxième zone de coupe (26) restant passive lors de l'usinage par enlèvement de copeaux, et
       B) finition d'au moins une partie de la section de pièce brute ébauchée (46) avec la fraise conique-convexe (10), celle-ci étant placée par rapport à la direction d'avance actuelle (40) au point de référence (38) de la fraise conique-convexe (10) à l'intérieur d'une deuxième plage angulaire d'usinage ($\alpha$2, $\beta$2), de telle sorte qu'un usinage par enlèvement de copeaux soit effectué avec la deuxième zone de coupe (26) de la fraise conique-convexe (10), la deuxième zone de coupe (26) étant en contact avec la pièce brute (30) pour l'usinage par enlèvement de copeaux.

2. Procédé selon la revendication 1, **caractérisé en ce que** la fraise conique-convexe (10) est mobile de manière variable pendant les étapes A) d'ébauche et B) de finition, respectivement à l'intérieur de la première plage angulaire d'usinage ($\alpha$1, $\beta$1) et de la deuxième plage angulaire d'usinage ($\alpha$2, $\beta$2).

3. Procédé selon la revendication 1 ou 2, **caractérisé en ce que** la première ($\alpha$1, $\beta$1) et la deuxième ($\alpha$2, $\beta$2) zone angulaire d'usinage se chevauchent ou sont adjacentes ou leurs zones angulaires d'usinage sont espacées en valeur absolue.

4. Procédé selon l'une quelconque des revendications 1 à 3, **caractérisé en ce que** les étapes A) d'ébauche et B) de finition sont réalisées en alternance sur des sections de pièce brute (30, 46) différentes, de préférence adjacentes.

5. Procédé selon l'une quelconque des revendications 1 à 4, **caractérisé en ce que** la fraise conique-convexe (10) est basculée pendant l'étape A) d'ébauche d'un premier angle de renversement ($\alpha$1) dans le sens de la direction d'avance (40) de la fraise conique-convexe (10) à l'intérieur de la première plage angulaire d'usinage ($\alpha$1, $\beta$1).

6. Procédé selon l'une quelconque des revendications 1 à 5, **caractérisé en ce que** la fraise conique-convexe (10) est basculée à l'étape B) de finition d'un deuxième angle de renversement ($\alpha$2) dans le sens d'une direction d'avance (40) de la fraise (10) à l'intérieur de la deuxième plage angulaire d'usinage ($\alpha$2, $\beta$2).

7. Procédé selon l'une quelconque des revendications 1 à 6, **caractérisé en ce que**, à l'étape A) d'ébauche, la fraise conique-convexe (10) est inclinée latéralement par rapport à la direction d'avance (40) d'un premier angle d'inclinaison ($\beta$1) à l'intérieur de la première plage angulaire d'usinage ($\alpha$1, $\beta$1) et/ou à l'étape B) de finition la fraise est inclinée latéralement par rapport à la direction d'avance d'un deuxième angle d'inclinaison (β2) à l'intérieur de la deuxième plage angulaire d'usinage (α2, β2).

8. Procédé selon l'une quelconque des revendications 1 à 7, **caractérisé en ce qu'**à l'étape A) d'ébauche ou/et à l'étape B) de finition un mouvement relatif entre la fraise conique-convexe (10) et la pièce brute (30) est effectué en continu, dans lequel

   - la fraise conique-convexe (30) est guidée en continu autour de l'ébauche ou de la pièce brute ébauchée ou/et
   - la pièce brute (30) ou la pièce brute ébauchée (46) est guidée en continu par rapport à la fraise conique-convexe (10) le long de trajectoires de fraisage définies (36, 56, 58).

9. Procédé selon la revendication 8, **caractérisé en ce que** les trajectoires de fraisage (36, 56, 58) sont différentes les unes des autres à l'étape A) d'ébauche et à l'étape B) de finition.

10. Procédé selon la revendication 8 ou 9, **caractérisé en ce que** les trajectoires de fraisage (36, 56, 58) sont espacées d'une distance de trajectoire définie (62) à l'étape A) d'ébauche et à l'étape B) de finition, les distances de trajectoire (62) étant identiques ou différentes les unes des autres à l'étape A) d'ébauche et à l'étape B) de finition.

11. Procédé selon l'une quelconque des revendications 1 à 10, **caractérisé en ce qu'**un angle de cône (γ) entre un axe longitudinal (23) de la fraise et une surface périphérique (19) d'un cône sous-jacent à la section de fraise conique-convexe (14) se situe dans une plage angulaire de 50° à 85°, et est de préférence d'environ 70°.

12. Procédé selon l'une quelconque des revendications 1 à 11, **caractérisé en ce qu'**un rapport entre un rayon de transition (17) et un diamètre de tige est compris entre 0 % et 30 % et/ou un rapport entre le rayon de courbure (22) d'une surface périphérique (20) de la section de fraise conique-convexe (14) et un diamètre de tige de la fraise (10) est compris entre 2 et 50.

13. Procédé selon l'une quelconque des revendications 1 à 12, **caractérisé en ce que** la transition (16) entre la tige (12) et la section de fraise conique-convexe (14) est continue, étagée ou franche.

14. Procédé selon l'une quelconque des revendications 1 à 13, **caractérisé en ce que** la tige est sensiblement cylindrique, ou sensiblement conique, ou conique-cylindrique, ou est composée de différentes sections coniques ainsi que cylindriques.

15. Procédé selon l'une quelconque des revendications 1 à 14, **caractérisé en ce que** la section de fraise conique-convexe (14) se rétrécit jusqu'à une pointe (18, 18', 18") ou une face d'extrémité, ou **en ce qu'**une pointe sphérique supplémentaire (18') est présente à l'extrémité exposée de la section de fraise conique-convexe (14).

Fig. 1A

Fig. 1B

Fig. 1C

Fig. 2A

Fig. 2B

Fig. 2C

Fig. 3A

Fig. 3B

Fig. 3C

Fig. 3D

Fig. 4A

Fig. 4B

Fig. 4C

Fig. 5A

Fig. 5B

Fig. 5C

Fig. 6A

Fig. 6B

Fig. 6C

Fig. 7

44
β2
10
23
12
38
52
30
36
50
46

**Fig. 8A**

30
P₃
10
23
12
16
38
36
48

**Fig. 8B**

36
38
10
23
12
48
30

**Fig. 8C**

Fig. 9A

Fig. 9B

Fig. 9C

Fig. 10

Fig. 11

Fig. 12A

Fig. 12B

Fig. 12C

Fig. 13A

Fig. 13B

Fig. 13C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6077002 A
- CH 661678 A5
- US 2017095865 A1
- DE 102016117932 A1
- EP 0316807 A1
- DE 102015104679 B3